# EUROPEAN PATENT SPECIFICATION

(11) **EP 3 144 143 B1**
(45) Date of publication and mention of the grant of the patent: **14.11.2018**
(21) Application number: 16187995.2
(22) Date of filing: 09.09.2016
(51) Int. Cl.: B32B 27/08, B32B 27/30, B32B 27/34, B32B 1/08, F16L 11/04

(54) **FUEL TUBE FOR A GASOLINE ENGINE**
KRAFTSTOFFROHR FÜR EINEN BENZINMOTOR
TUBE DE CARBURANT POUR UN MOTEUR ESSENCE

(30) Priority: 16.09.2015 US 201514855541
(43) Date of publication of application: 22.03.2017
(73) Proprietor: Cooper-Standard Automotive, Inc., Novi, MI 48375 (US)
(72) Inventor: ROSENBERG, Andrew, Almont, MI Michigan 48003 (US); BENSKO, David, Oscoda, MI Michigan 48750-1257 (US)
(74) Representative: Kordel, Mattias

(56) References cited:
- EP-A1- 1 331 091
- US-A1- 2002 012 806
- US-A1- 2007 048 471
- US-A1- 2008 057 246
- US-A1- 2009 123 683

## Description

### FIELD

The present disclosure relates generally to a fuel tube for a gasoline engine. The present disclosure more particularly relates to fuel tube for a gasoline engine having an ethylene vinyl alcohol copolymer (EVOH) layer.

### BACKGROUND

This section merely provides background information related to the present disclosure and may not constitute prior art.

Various fuel tubes are used in automotive and other gasoline engine applications for transferring liquid fuel or fuel vapor. A layer of ethylene vinyl alcohol copolymer (EVOH) is typically used with polymer tubes to provide a hydrocarbon barrier. For example, U.S. Publication No. 2005-0221040 A1 describes a two and three-layered constructions of fuel tubes including a layer of EVOH. The EVOH has a thickness of 0.2mm to 0.3mm. EVOH is a relatively brittle material utilized solely for its permeation characteristics.

While known gasoline engine fuel tubes for transferring liquid fuel and fuel vapor may have proven to be generally suitable for their intended purposes, some fuel tubes have had splitting issues. Many manufacturing techniques have been employed to contain this issue.

A continuous need for improvement exists in the relative art.

EP 1 331 091 A1 discloses a fuel tube for a gasoline engine, comprising an outer polymer layer comprising a polyamide P3, a layer comprising a blend of copolyamides 6/12, an intermediate barrier layer of ethylene vinyl alcohol copolymer and an inner polymer layer comprising a polyamide P1 or a blend thereof with a polyolefin PO1. Preferably polyamide P3 of the outer layer is selected from PA11 and PA12, whereas polyamide P1 of the inner layer is selected from PA6, PA6,6 and PA12. The EVOH layer exhibits an ethylene content in the range 25 to 70 mol percent, and a thickness between 0.01mm and 0.2 mm.

### SUMMARY

This section provides a general summary of the disclosure, and is not a comprehensive disclosure of its full scope or all of its features.

In accordance with one particular aspect, the present teachings provide a fuel tube for a gasoline engine. The fuel tube includes an outer layer, an inner layer and an intermediate layer. The outer polymer layer is constructed of a first polyamide selected from a first group consisting of polyamide 12, polyamide 11, polyamide 10-10, polyamide 6-10, polyamide 6-12, polyamide 12-12, and combinations thereof. The inner polymer layer is constructed of a second polyamide selected from a second group consisting of polyamide 6-10, polyamide 6-12, polyamide 10-10, and combinations thereof. The intermediate layer is a permeation barrier layer constructed of ethylene vinyl alcohol copolymer (EVOH) having an ethylene content of 24 to 29 mol percent and a thickness between 0.02mm and 0.07 mm.

In accordance with another particular aspect, the present teachings provide a fuel tube for a gasoline as above, comprising a first adhesive layer between the inner layer and the intermediate layer, and a second adhesive layer between the outer layer and the intermediate layer.

Further areas of applicability will become apparent from the description provided herein. The description and specific examples in this summary are intended for purposes of illustration only and are not intended to limit the scope of the present disclosure.

### DRAWINGS

The present teachings will become more fully understood from the detailed description, any appended claims and the following drawings. The drawings are for illustrative purposes only and are not intended to limit the scope of the present disclosure.
Figure 1 is a perspective view of a fuel tube in accordance with the present teachings.
Figure 2 is a cross-sectional view of the fuel tube of Figure 1.
Figure 3 is a cross-sectional view of another fuel tube in accordance with the present teachings.
Figure 4 is a cross-sectional view of another fuel tube in accordance with the present teachings.

Corresponding reference numerals indicate corresponding parts throughout the several views of the drawings.

### DESCRIPTION OF VARIOUS ASPECTS

The following description is merely exemplary in nature and is not intended to limit the present disclosure, its application, or uses. It should be understood that throughout the drawings, corresponding reference numerals indicate like or corresponding parts and features.

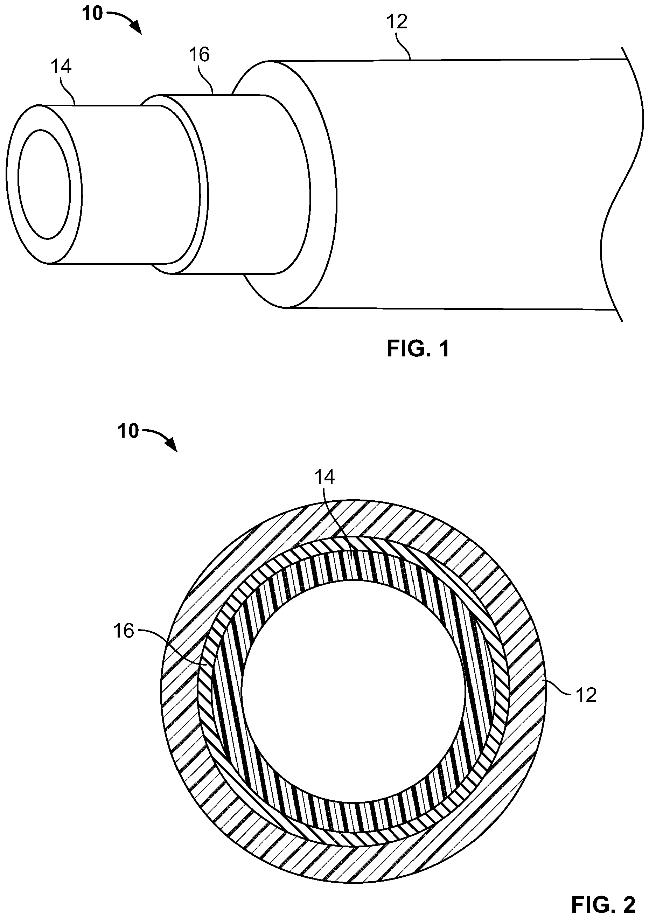

With general reference to Figures 1 and 2 of the drawings, a fuel tube for a gasoline engine in accordance with the present disclosure is shown and generally identified at reference character 10. In the embodiment of Figures 1 and 2, the fuel tube 10 has a three layer construction including an outer polymer layer 12 and inner polymer layer 14 and an intermediate layer 16. The layers of the fuel tube 10 may be co-extruded in a known manner. It will be understood that the fuel tube may be used in automotive or other gasoline engine applications for transferring liquid fuel or fuel vapor.

In certain embodiments, an outer diameter (OD) of the fuel tube 10 may range from approximately 6.0mm to 16.0mm. A wall thickness of the fuel tube may range from approximately 1.0mm to 1.8mm. It will be appreciate that these dimensions and other dimensions set forth herein may be modified for particular applications within the scope of the present teachings.

The outer layer 12 is constructed of a first polyamide. The first polyamide is selected from a group consisting of polyamide 12, polyamide 11, polyamide 10-10, polyamide 6-10, polyamide 6-12, polyamide 12-12 and combinations thereof. The outer polyamide layer 12 may have a thickness of approximately 0.3mm to 0.9mm.

The inner layer 14 is constructed of a second polyamide. The second polyamide is a low oligomer polyamide The second polyamide is selected from a second group consisting of polyamide 6-10, polyamide 6-12, polyamide 10-10 and combinations thereof. The inner layer 14 may be an electrically non-conductive, polyamide layer having a thickness of approximately 0.25mm to 0.8mm. Alternatively, the inner layer 14 may be an electrically conductive or static dissipative layer having a thickness of approximately 0.10mm to 0.40mm. Where the inner layer 14 is electrically conductive or static dissipative, the fuel tube 10 may incorporate an additional layer of polyamide between the intermediate layer 16 and the inner layer 14.

The intermediate layer 16 is a permeation barrier layer of ethylene vinyl alcohol copolymer (EVOH). Typical fuel tubes incorporate an EVOH layer having an ethylene content of approximately 32 mol percent. The EVOH layer 16 of the present disclosure has an ethylene content of approximately 24 to 29 mol percent. The EVOH layer has a thickness of 0.02mm and 0.07mm. In certain preferred embodiments, the EVOH layer 16 has a thickness no greater than 0.07mm. In other embodiments, the EVOH layer has a thickness no greater than 0.05mm.

According to one specific example, the fuel tube 10 has an outer layer 12 of polyamide 12 having a thickness of 0.50mm. One suitable polyamide 12 is commercially available from EMS-Chemie Holding AG as Grilamid XE 4076. In this specific example, the fuel tube 10 has an inner layer 14 of polyamide 6-10 with a thickness of 0.45mm. One suitable polyamide 6-10 is commercially available from EMS-Chemie Holding AG as Grilamid XE 4077. Further, in this specific example, the fuel tube 10 has an intermediate layer 16 of EVOH having an ethylene content of 25 mol percent and a thickness of 0.05mm. One suitable EVOH is commercially available from Soarus, LLC as Soarnol V2504RB. Representative tube diameters include OD=8.0mm and ID=6.0mm; OD=10.0mm and ID=8.0mm; OD=12.0mm and ID=10.0mm; OD=12.7mm and ID=10.7mm; and OD=15.3mm and ID=12.5mm.

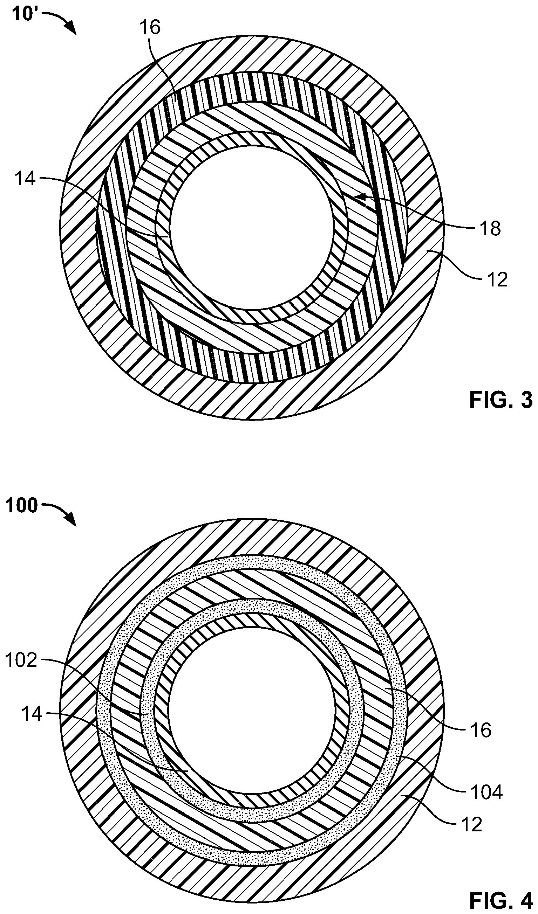

Turning to the cross-sectional view of Figure 3, an alternative construction of the tube 10 is identified at reference character 10'. In this embodiment, the inner layer 14 is electrically conductive or static dissipative and the tube 10' incorporates an additional layer 18 of polyamide between the intermediate layer 16 and inner layer 14.

Turning to the cross-sectional view of Figure 4, another fuel tube for a gasoline engine in accordance with the present disclosure is shown and generally identified at reference character 100. In certain applications, it may be desired to incorporate adhesive layers into the fuel tube 10 to adhere the polyamide layers 12 and 14 to the EVOH layer 16. Such adhesive layers are not necessary, however, within the scope of the present disclosure but may be desired depending on the polyamides selected for the inner and outer layers 12 and 14. Given the similarities between the fuel tube 100 and the fuel tube 10, like reference characters have been used in the drawings to identify like elements between the two embodiments.

The fuel tube 100 structurally differs from the fuel tube 10 in that the fuel tube 100 additionally includes first and second adhesive layers 102 and 104. As such, the fuel tube 100 is a five layer fuel tube. The layers of the fuel tube 100 may be co-extruded in a conventional manner. The materials of the inner and outer layers 12 and 14 and the thickness of these layers 12 and 14 may correspond with the corresponding materials and thickness ranges of the fuel tube 10.

According to one specific example, the fuel tube 100 has an outer layer of 12 of polyamide 12 having a thickness of 0.45mm. One suitable polyamide 12 is commercially available from Arkema as Rilsamid MA4411. In this specific example, the fuel tube 100 has an inner layer 14 of polyamide 6-12 with a thickness of 0.40mm. One suitable polyamide 6-12 is commercially available from EMS-Chemie Holding AG as Grilamid 2D 25 W20 HLX. Additionally in this specific example, the fuel tube 100 has an intermediate layer 16 of EVOH having an ethylene content of 25 mol percent and a thickness of 0.05mm. One suitable EVOH is commercially available from Soarus, LLC as Soarnol V2504RB. Further in this specific example, the first and second adhesive layers 102 and 104 are polyamide adhesives. Both adhesive layers 102 and 104 may have a thickness of 0.05mm. One suitable polyamide adhesive is commercially available from Arkema as Rilsan Tie Flex S 452.

The present teachings have been described in relationship to embodiments having three, four and five layer constructions. It will be appreciated that lesser or additional layers may be utilized within the scope of the present teachings.

It will be appreciated that the present teachings provide a fuel tube having increased robustness and reduced oligomers to help prevent sticking valves and plugged injectors. A reduced thickness of the EVOH layer renders the fuel tube significantly more resistant to splitting or cracking during manufacturing. It was surprisingly discovered that there was a dramatic reduction in splitting due to the reduced thickness of the EVOH layer.

## Claims

1. A fuel tube for a gasoline engine, the fuel tube comprising:
an outer polymer layer constructed of a polyamide selected from a group consisting of polyamide 12, polyamide 11, polyamide 10-10, polyamide 6-10, polyamide 6-12, polyamide 12-12 and combinations thereof;
an inner polymer layer constructed of a low oligomer polyamide selected from a group consisting of polyamide 6-10, polyamide 6-12, polyamide 10-10 and combinations thereof; and
an intermediate layer of ethylene vinyl alcohol copolymer (EVOH), wherein the intermediate layer is a permeation barrier layer having an ethylene content of 24 to 29 mol percent and a thickness between 0.02 mm and 0.07 mm.

2. The fuel tube for a gasoline engine of claim 1, wherein the fuel tube is three-layer, co-extruded tube.

3. The fuel tube for a gasoline engine of claim 1, wherein the fuel tube is a liquid fuel tube for transferring a liquid fuel.

4. The fuel tube for a gasoline engine of claim 1, wherein the fuel tube is a fuel vapor tube for transferring a fuel vapor.

5. The fuel tube for a gasoline engine of claim 1, wherein the inner layer is a conductive layer or a static dissipative layer.

6. The fuel tube for a gasoline engine of claim 1, wherein the inner layer is a non-conductive layer.

7. The fuel tube for a gasoline engine of claim 5, further comprising a further layer of polyamide disposed between the inner layer and the intermediate layer.

8. The fuel tube for a gasoline engine of claim 1, further comprising at least a first adhesive layer between the intermediate layer and one of the inner and outer polymer layers.

9. The fuel tube for a gasoline engine of claim 1, further comprising a first adhesive layer between the inner layer and the intermediate layer and a second adhesive layer between the outer layer and the intermediate layer.

10. The fuel tube for a gasoline engine of claim 9, wherein the fuel tube is a five-layer, co-extruded tube.

11. The fuel tube for a gasoline engine of claim 9, wherein the inner layer is a conductive layer or a static dissipative layer, and
further comprising a further layer of polyamide disposed between the conductive layer and the intermediate layer,
wherein the further layer of polyamide may replace the first adhesive.

## Patentansprüche

1. Kraftstoffrohr für einen Benzinmotor, wobei das Kraftstoffrohr umfasst:
eine Polymeraußenschicht, die aus einem Polyamid konstruiert ist, das aus einer Gruppe ausgewählt ist, die aus einem Polyamid 12, aus einem Polyamid 11, aus einem Polyamid 10-10, aus einem Polyamid 6-10, aus einem Polyamid 6-12, aus einem Polyamid 12-12 und aus Kombinationen davon besteht;
eine Polymerinnenschicht, die aus einem Polyamid mit niedrigem Oligomeranteil konstruiert ist, das aus einer Gruppe ausgewählt ist, die aus einem Polyamid 6-10, aus einem Polyamid 6-12, aus einem Polyamid 10-10 und aus Kombinationen davon besteht; und
eine Zwischenschicht aus Ethylenvinylalkohol-Copolymer (EVOH), wobei die Zwischenschicht eine Permeationsbarrierenschicht mit einem Ethylengehalt von 24 bis 29 Molprozent und mit einer Dicke zwischen 0,02 mm und 0,07 mm ist.

2. Kraftstoffrohr für einen Benzinmotor nach Anspruch 1, wobei das Kraftstoffrohr ein coextrudiertes Dreischichtrohr ist.

3. Kraftstoffrohr für einen Benzinmotor nach Anspruch 1, wobei das Kraftstoffrohr ein Flüssigkraftstoffrohr zum Transportieren eines Flüssigkraftstoffs ist.

4. Kraftstoffrohr für einen Benzinmotor nach Anspruch 1, wobei das Kraftstoffrohr ein Kraftstoffdampfrohr zum Transportieren eines Kraftstoffdampfs ist.

5. Kraftstoffrohr für einen Benzinmotor nach Anspruch 1, wobei die Innenschicht eine leitfähige Schicht oder eine elektrostatisch ableitfähige Schicht ist.

6. Kraftstoffrohr für einen Benzinmotor nach Anspruch 1, wobei die Innenschicht eine nichtleitende Schicht ist.

7. Kraftstoffrohr für einen Benzinmotor nach Anspruch 5, das ferner eine weitere Schicht eines Polyamids umfasst, die zwischen der Innenschicht und der Zwischenschicht angeordnet ist.

8. Kraftstoffrohr für einen Benzinmotor nach Anspruch 1, das ferner zwischen der Zwischenschicht und einer von der Polymerinnenschicht und der Polymeraußenschicht wenigstens eine erste Haftschicht umfasst.

9. Kraftstoffrohr für einen Benzinmotor nach Anspruch 1, das ferner eine erste Haftschicht zwischen der Innenschicht und der Zwischenschicht und eine zweite Haftschicht zwischen der Außenschicht und der Zwischenschicht umfasst.

10. Kraftstoffrohr für einen Benzinmotor nach Anspruch 9, wobei das Kraftstoffrohr ein coextrudiertes Fünfschichtrohr ist.

11. Kraftstoffrohr für einen Benzinmotor nach Anspruch 9, wobei die Innenschicht eine leitfähige Schicht oder eine elektrostatisch ableitfähige Schicht ist, und
wobei das Kraftstoffrohr ferner eine weitere Schicht aus Polyamid umfasst, die zwischen der leitfähigen Schicht und der Zwischenschicht angeordnet ist,
wobei die weitere Schicht aus Polyamid das erste Haftmittel ersetzen kann.

## Revendications

1. Tube de carburant pour moteur à essence, lequel tube de carburant comprend :
une couche de polymère externe composée de polyamide sélectionné dans un groupe consisté en polyamide 12, en polyamide 11, en polyamide 10-10, en polyamide 6-10, en polyamide 6-12, en polyamide 12-12 et en combinaisons de ceux-ci ;
une couche de polymère interne composée de polyamide oligomère faible sélectionné dans un groupe consisté en polyamide 6-10, en polyamide 6-12, en polyamide 10-10 et en combinaisons de ceux-ci ; et
une couche intermédiaire de copolymère d'éthylène vinyle alcool (EVOH), où ladite couche intermédiaire est une couche barrière imperméable dont la teneur en éthylène est de 24 à 29 de pourcentage molaire et dont l'épaisseur est comprise entre 0,02 mm et 0,07 mm.

2. Tube de carburant pour moteur à essence selon la revendication 1, où le tube de carburant est un tube coextrudé à trois couches.

3. Tube de carburant pour moteur à essence selon la revendication 1, où le tube de carburant est un tube de carburant liquide destiné au transfert de carburant liquide.

4. Tube de carburant pour moteur à essence selon la revendication 1, où le tube de carburant est un tube de vapeur de carburant destiné au transfert de vapeur de carburant.

5. Tube de carburant pour moteur à essence selon la revendication 1, où la couche interne est une couche conductrice ou une couche dissipative statique.

6. Tube de carburant pour moteur à essence selon la revendication 1, où la couche interne est une couche non-conductrice.

7. Tube de carburant pour moteur à essence selon la revendication 5, comprenant également une autre couche de polyamide placée entre la couche interne et la couche intermédiaire.

8. Tube de carburant pour moteur à essence selon la revendication 1, comprenant également au moins une première couche adhésive entre la couche intermédiaire et une de la couche interne et la couche externe.

9. Tube de carburant pour moteur à essence selon la revendication 1, comprenant également une première couche adhésive entre la couche interne et la couche intermédiaire, et une deuxième couche adhésive entre la couche externe et la couche intermédiaire.

10. Tube de carburant pour moteur à essence selon la revendication 9, où le tube de carburant est un tube coextrudé à cinq couches.

11. Tube de carburant pour moteur à essence selon la revendication 9, où la couche interne est une couche conductrice ou une couche dissipative statique, et
comprenant également une autre couche de polyamide placée entre la couche conductrice et la couche intermédiaire,
où l'autre couche de polyamide peut se substituer à le premier adhésif.
